**Europäisches Patentamt**

**European Patent Office**

**Office européen des brevets**

(11) Veröffentlichungsnummer: **0 505 713 A1**

## (12) EUROPÄISCHE PATENTANMELDUNG

(21) Anmeldenummer: **92102546.6**

(22) Anmeldetag: **15.02.92**

(51) Int. Cl.5: **D06F 37/22**, F16F 7/08, F16F 9/32

(30) Priorität: **23.03.91 DE 4109615**

(43) Veröffentlichungstag der Anmeldung:
**30.09.92 Patentblatt 92/40**

(84) Benannte Vertragsstaaten:
**DE FR GB IT**

(71) Anmelder: **SUSPA COMPART Aktiengesellschaft Industriestrasse 12-14**
**W-8503 Altdorf(DE)**

(72) Erfinder: **Stadelmann, Ludwig**
**Schopperstrasse 14**
**W-8503 Altdorf(DE)**

(74) Vertreter: **Rau, Manfred, Dr. Dipl.-Ing. et al**
**Rau & Schneck, Patentanwälte Königstrasse 2**
**W-8500 Nürnberg 1(DE)**

(54) Schwingungsfähige Abstützung für Trommelwaschmaschinen.

(57) Eine Abstützung für eine Trommelwaschmaschine mit horizontaler Drehachse weist ein Waschaggregat (1) auf, das über mindestens zwei Federbeine (2) gegenüber einer Grundplatte (4) abgestützt ist, wobei die Befestigung über elastische Lager (36,37) erfolgt. Da die Federbeine (2) aus Platzgründen im wesentlichen vertikal angeordnet sind, ist eine Horizontal-Dämpfungs-Vorrichtung (41) vorgesehen, die zwei Reibungsarme (44) aufweist, die gegen am Federbein (2) angebrachte Reibbeläge (48) anliegen.

FIG.3

EP 0 505 713 A1

Die Erfindung betrifft eine schwingungsfähige Abstützung für Trommelwaschmaschinen nach dem Oberbegriff des Anspruches 1.

Derartige Abstützungen sind bekannt, und zwar beispielsweise aus der DE-OS 16 10 085 (entsprechend GB-PS 11 87 269) und der DE-OS 15 85 990 (entsprechend GB-PS 11 23 208) bzw. der EP 0 108 217 A1 (entsprechend US-PS 4 991 412). Bei diesen schwingungsfähigen Abstützungen sind entweder nur zwei Federbeine vorgesehen, wie es aus der DE-OS 16 10 085 (entsprechend GB-PS 11 87 269) bekannt ist. Hierbei sind die beiden Federbeine in der Regel in der Schwerpunktebene des Waschaggregates angeordnet. Es können aber auch drei oder vier Federbeine vorgesehen sein. Die Federbeine sind aus Platzgründen in der Regel sehr steil, also fast vertikal mit einer leichten Neigung zur Drehachse des Waschaggregates hin geneigt, angeordnet. Sie nehmen die vertikalen Schwingungsanteile der beim Waschen und insbesondere beim Hochfahren zum Schleudern auftretenden Unwuchtschwingungen auf. Die Federbeine sind in der Regel mit Dämpfungseinrichtungen, und zwar primär mit Reibungsdämpfungseinrichtungen, aber auch hydraulischen Dämpfungseinrichtungen, versehen, die den vertikalen Schwingungsanteil der Unwuchtschwingungen dämpfen. Die horizontalen Anteile der Schwingungen werden von den elastischen Lagern, und zwar an erster Stelle von dem elastischen Lager zwischen Federbein und Grundplatte aufgenommen. Diese elastischen Lager, die Lagerkörper aus hochelastischem Material, wie beispielsweise Gummi, aufweisen, dämpfen, aufgrund der inneren Reibung des Gummis diese Schwingungen. Trotzdem sind diese Dämpfungen nicht ausreichend. Besonderes Gewicht bekommen diese horizontalen Anteile der Schwingungen, wenn am Waschaggregat regelmäßig angebrachte Unwucht-Ausgleichsgewichte im wesentlichen an der Unterseite des Waschaggregates angebracht werden, wodurch der Schwerpunkt des schwingungsfähigen Waschaggregates nach unten verlegt wird.

Man könnte die Amplitude dieser horizontalen Schwingungskomponenten durch entsprechende zwischen Gehäuse bzw. Grundplatte einerseits und Waschaggregat andererseits angeordnete Dämpfer reduzieren; dies erfordert wiederum aber Platz und insbesondere den Aufwand für einen gesonderten Dämpfer.

Der Erfindung liegt die Aufgabe zugrunde, eine schwingungsfähige Abstützung der gattungsgemäßen Art so weiterzubilden, daß mit einfachen Mitteln eine Dämpfung der horizontalen Schwingungskomponenten des Waschaggregats erreicht wird.

Diese Aufgabe wird erfindungsgemäß durch die Merkmale im Kennzeichnungsteil des Anspruches 1 gelöst. Durch die erfindungsgemäßen Maßnahmen werden die quer zur Drehachse und im wesentlichen in der Horizontalen verlaufenden Schwingungskomponenten der gesamten Unwuchtschwingung gedämpft. Dadurch wird die Gefahr eines Anschlagens des Waschaggregates am Gehäuse vermieden. Das Federbein selber wird in seinem Aufbau überhaupt nicht verändert. Es kann also nach wie vor als normales Federbein bei Waschmaschinen eingesetzt werden, bei denen eine solche zusätzliche Horizontal-Dämpfung nicht erforderlich ist. Darüber hinaus liegt ein erheblicher Vorteil darin, daß durch die erfindungsgemäßen Maßnahmen eine Stabilisierung der Abstützung in Richtung der Drehachse erreicht wird, d.h. sogenannte Nickschwingungen werden wirksam unterbunden. Die Ausgestaltung nach Anspruch 3 stellt sicher, daß keinerlei Verklemmungen zwischen der Horizontal-Dämpfungs-Vorrichtung einerseits und dem Federbein andererseits auftreten können. Dieser Effekt wird durch die Maßnahmen nach den Ansprüchen 4 und 5 noch weiter verbessert.

Durch die Weiterbildung nach Anspruch 6 kann die Reibungskraft genau eingestellt werden. Die Ansprüche 7 bis 8 geben besonders einfache Ausgestaltungen bezüglich der Anbringung der Reibungsarme an der Grundplatte wieder. Insbesondere Anspruch 8 ermöglicht es, daß die Grundplatte oder das Gehäuse der Waschmaschine selber für den Einbau der Horizontal-Dämpfungs-Vorrichtung überhaupt nicht verändert zu werden braucht. Die Ansprüche 9 und 10 geben eine Ausführungsform wieder, bei der die Reibungsbeläge nicht am Rohr des Federbeins angebracht sind.

Weitere Merkmale, Einzelheiten und Vorteile der Erfindung ergeben sich aus der nachfolgenden Beschreibung von Ausführungsbeispielen der Erfindung anhand der Zeichnung. Es zeigt

| | |
|---|---|
| Fig. 1 | eine Trommelwaschmaschine mit einer Abstützung gemäß der Erfindung in schematischer Darstellung in Seitenansicht mit aufgebrochenem Gehäuse, |
| Fig. 2 | die Trommelwaschmaschine in einer Vorderansicht gemäß dem Sichtpfeil II in Fig. 1 ebenfalls mit aufgebrochenem Gehäuse, |
| Fig. 3 | eine Ausschnittvergrößerung aus Fig. 2 betreffend ein Federbein und seine Anlenkung in aufgebrochener Darstellung, |
| Fig. 4 | einen Querschnitt durch das Federbein entsprechend der Schnittlinie IV-IV in Fig. 3, |
| Fig. 5 | einen Teil-Längsschnitt durch Fig. 3 entsprechend der Schnittlinie V-V in Fig. 3, |
| Fig. 6 | ein Federbein mit einer abgewandelten Ausführungsform einer |

Horizontal-Dämpfungs-Vorrichtung,

Fig. 7     einen Querschnitt durch Fig. 6 entsprechend der Schnittlinie VII-VII in Fig. 6,

Fig. 8     eine Teil-Ansicht eines Federbeins mit einer weiteren Ausführungsform einer Horizontal-Dämpfungs-Vorrichtung,

Fig. 9     einen Querschnitt durch Fig. 8 entsprechend der Schnittlinie IX-IX in Fig. 8,

Fig. 10    eine Teil-Längsansicht entsprechend dem Sichtpfeil X in Fig. 8,

Fig. 11    eine Teil-Ansicht eines Federbeins mit einer weiteren Ausführungsform einer Horizontal-Dämpfungs-Vorrichtung,

Fig. 12    einen Querschnitt durch das Federbein entsprechend der Schnittlinie XII-XII in Fig. 11 und

Fig. 13    eine Teil-Längsansicht entsprechend dem Sichtpfeil XIII in Fig. 11.

Eine Trommelwaschmaschine weist ein Waschaggregat 1 auf, das über Federbeine 2 gegenüber einem auf dem Boden 3 stehenden Grundrahmen bzw. einer Grundplatte 4 abgestützt ist.

Das Waschaggregat 1 weist einen Laugenbehälter 5 auf, in dem eine um eine horizontale Drehachse 6 von einem an den Laugenbehälter 5 angeflanschten Antriebsmotor 7 antreibbare Waschtrommel 8 angeordnet ist. Die Eingabe und Entnahme von Wäsche in die Waschtrommel 8 erfolgt durch eine einer Stirnseite 9 des Laugenbehälters 5 zugeordnete Klappe 10. Die Übertragung des Antriebs vom Antriebsmotor 7 auf die Waschtrommel 8 erfolgt in üblicher Weise mittels eines Keilriementriebes 11. Das Waschaggregat 1 ist von einem mit der Grundplatte 4 verbundenen, etwa quaderförmigen Gehäuse 12 umgeben. Oberhalb des Waschaggregates 1 sind im Gehäuse 12 einerseits eine Waschmitteleingabe 13 und andererseits eine elektronische Steuerung 14 einschließlich der Waschprogramm-Eingabe angeordnet. Da aus diesem Grunde oberhalb des Waschaggregates 1 im Gehäuse 12 kein nennenswerter Platz mehr zur Verfügung steht, ist ein Unwucht-Ausgleichsgewicht 15 im unteren Bereich des Waschaggregates 1 an dessen Laugenbehälter 5 angebracht. Hierdurch wird der Schwerpunkt 16 des Waschaggregates 1 als schwingungsfähigem System aus dem Bereich der Drehachse 6 nach unten verlegt.

Die Federbeine 2 weisen jeweils ein zylindrisches Rohr 17 auf, in dem koaxial ein Stößel 18 verschiebbar geführt ist. Am im Rohr 17 befindlichen Ende des Stößels 18 ist ein Dämpfungs-Kolben 19 angebracht, der mit ringförmigen Ausnehmungen 20 versehen ist, in denen Reibungselemente 21 angeordnet sind. Diese können aus geschäumtem Polyurethan bestehen.

Zwischen dem Dämpfungs-Kolben 19 und dem Boden 22 des Rohres 17 ist eine vorgespannte Schrauben-Druckfeder 23 angeordnet. Das Rohr 17 ist an seinem stößelaustrittsseitigen Ende mit einer mit dem Rohr 17 fest verbundenen Führungsbüchse 24 versehen, in der der Stößel 18 koaxial zur Mittel-Längsachse 25 des Federbeins 2 geführt wird.

Am Waschaggregat einerseits und an der Grundplatte 4 andererseits sind jeweils eine Aufnahme 26 bzw. 27 zur Befestigung des Federbeins 2 angebracht. Die Aufnahme 26 weist eine Bohrung 28 zum Hindurchstecken des Stößels 18 auf. Die Aufnahme 27 weist eine Bohrung 29 zum Hindurchstecken eines fest mit dem Boden 22 des Rohres 17 verbundenen Gewindebolzens 30 auf. Beiderseits der plattenartigen, also weitgehend ebenen Aufnahmen 26,27, sind elastische Lagerkörper 31,31' bzw. 32,32', beispielsweise aus Gummi oder einem anderen geeigneten hochelastischen Werkstoff, angeordnet. An der Außenseite der elastischen Lagerkörper 31,31' und 32' liegen Druckplatten 33 an, während an der Außenseite des elastischen Lagerkörpers 32 der Boden 22 des Rohres 17 anliegt. Die dem elastischen Lagerkörper 31' zugeordnete Druckplatte 33 liegt gegen einen Ringbund 34 des Stößels 18 an. Auf das freie Ende des Stößels 18 einerseits und den Gewindebolzen 30 andererseits sind Muttern 35 aufgeschraubt, so daß die elastischen Lagerkörper 31,31',32,32' vorgespannt werden und gleichzeitig das Federbein 2 elastisch nachgiebig einerseits am Waschaggregat 1 und mit einem elastischen Lager 36 und andererseits an der Grundplatte 4 mit einem elastischen Lager 37 angelenkt ist.

Wenn - wie im beschriebenen Ausführungsbeispiel - insgesamt nur zwei Federbeine 2 vorhanden sind, dann sind diese in einer quer zur Drehachse 6 verlaufenden Schwerpunktebene 38 angeordnet, in der sich also auch der Schwerpunkt 16 befindet. Die Federbeine 2 sind - primär aus Platzmangel im Gehäuse 12 - angenähert vertikal angeordnet, d.h. sie sind von der Grundplatte 4 aus leicht aufeinanderzu, also leicht zur Drehachse 6 hin, geneigt. Dieser Neigungswinkel a beträgt in der Praxis nicht mehr als 12°. Der Aufbau der Waschmaschine und der Federbeine 2 und deren Anlenkung am Waschaggregat 1 einerseits und der Grundplatte 4 andererseits sind allgemein bekannt, und zwar beispielsweise aus der DE-OS 16 10 085 (entsprechend GB-PS 11 87 269), der DE-OS 15 85 990 (entsprechend GB-PS 11 23 208) oder der EP 0 108 217 A1 (entsprechend US-PS 4 991 412).

Die Federbeine 2 nehmen nur in Richtung ihrer Achse 25 verlaufende Kräfte elastisch über die Druckfeder 23 auf und dämpfen diese mittels des Dämpfungs-Kolbens 19 durch entsprechende Reibung an der Innenwand des Rohres 17. Aufgrund ihrer überwiegend vertikalen Anordnung dämpfen die Federbeine 2 also überwiegend die in der Vertikalen entsprechend dem Richtungspfeil 39 wirkenden Schwingungskomponenten. Die durch den horizontalen Richtungspfeil 40 angedeuteten Schwingungskomponenten nehmen dagegen die Federbeine 2 zwar aufgrund ihrer elastischen Lager 36,37 auf. Diese horizontalen Schwingungsbewegungen werden aber in den elastischen Lagerkörpern 32,32' nur in einem geringen Umfang, der der Eigendämpfung des Gummis od.dgl. entspricht, gedämpft. Der Auslenkwinkel b aufgrund der horizontalen Schwingungskomponenten kann bis zu 10° betragen. Er wird um so größer, je tiefer der Schwerpunkt 16 relativ zur Drehachse 6 nach unten verlegt ist. Besonders große horizontale Auslenkungen entsprechend dem Richtungspfeil 40 treten beim Anlauf zum Schleudern und beim Auslauf des Schleuderns, also jeweils beim Durchfahren der kritischen Drehzahl des schwingungsfähigen Systems auf. Um diese horizontalen Schwingungen zuverlässig zu dämpfen, um insbesondere Kollisionen des Waschaggregates 1 mit dem Gehäuse 12 zu vermeiden, sind Horizontal-Dämpfungs-Vorrichtungen 41 vorgesehen. Eine solche Vorrichtung 41 weist zwei einander paarweise zugeordnete Bügel 42,42' auf, die fest mit der Grundplatte 4 verbunden sind. Im dargestellten Ausführungsbeispiel sind sie beispielsweise mit einer unteren Halteplatte 43 zwischen den elastischen Lagerkörpern 32,32' und der Aufnahme 27 fest eingespannt. Es ist aber auch zweckmäßig, sie hiermit oder mit der Grundplatte 4 direkt zu verschweißen oder auf andere Weise fest zu verbinden. An ihrem der Halteplatte 43 entgegengesetzten Ende weisen die Bügel 42,42' und das Rohr 17 zwischen sich aufnehmende Reibungsarme 44,44' auf. Beide Bügel 42,42' sind an einer Halteplatte 43 angebracht. Die Reibungsarme 44,44' sind teilkreisförmig gebogen, wobei der Krümmungs-Mittelpunkt 45 mit dem den Auslenkwinkel b definierenden Schwingungsmittelpunkt des Federbeins 2 um das elastische Lager 37 zusammenfällt. Dieser Krümmungs-Mittelpunkt 45 liegt also auf der Achse 25, und zwar etwa am Schnittpunkt mit der Aufnahme 27.

Auf dem Rohr 17 ist eine Reibungsbüchse 46 angebracht, die mit geringem Spiel auf dem Rohr 17 in dessen Längsrichtung frei verschiebbar ist.

Diese Reibungsbüchse 46 weist jeweils zugeordnet zu den Reibungsflächen 47,47' der Reibungsarme 44,44' Reibbeläge 48,48' auf, die aus einem üblichen Reibungsmaterial, beispielsweise einem geschäumten Kunststoff, wie geschäumtem Polyurethan, aber auch aus harten Reibungsmaterialien bestehen können. Die Reibungsbüchse 46 weist jeweils oberhalb und unterhalb jedes Reibbelages 48,48' Führungsstege 49 auf, zwischen denen jeweils ein Reibungsarm 44 bzw. 44' geführt ist. Damit ist sichergestellt, daß die Reibungsbüchse 46 und damit deren Reibungsbeläge 48,48' ihre Lage zu den Reibungsflächen 47,47' der Reibungsarme 44,44' behalten, wobei bei Relativbewegungen des Federbeins 2 relativ zum Bügel 42,42' die Reibungsbüchse 46 sich geringfügig auf dem Rohr 17 verschieben kann. Damit die Reibungswege möglichst groß sind, sind die Bügel 42,42' in Richtung der Achse 25 so lang ausgebildet, daß die Reibungsbüchse 46 sich im Bereich des stößelaustrittsseitigen Endes, also benachbart zur Führungsbüchse 24 befindet.

Die Bügel 42,42' können mit einer derartigen Vorspannung mit ihren Reibungsflächen 47,47' gegen die Reibbeläge 48,48' anliegen, daß ausreichende Dämpfungskräfte erzeugt werden. Um diese Reibungskräfte genauer definieren zu können, oder aber um sie lediglich entsprechend hoch machen zu können, kann es zweckmäßig sein, die freien Enden der Reibungsarme 44,44' mit einer vorgespannten Schrauben-Zugfeder 50 miteinander zu verbinden.

Wie aus Fig. 6 hervorgeht, kann eine Reibungsbüchse 46a auch mit leichtem Spiel auf die aus dem Rohr 17 herausragende Führungsbüchse 24 aufgesetzt werden. Die Bügel 42a und 42a' müssen dann nur entsprechend verlängert sein. Ansonsten ist ihre Ausgestaltung identisch. Auch die entsprechende Ausgestaltung der Reibungsbüchse 46a mit Reibungsbelägen 48,48' und Führungsstegen 49 für die Reibungsarme 44,44' ist identisch. Der Vorteil dieser Ausgestaltung liegt darin, daß die Reibungswege zwischen Reibungsflächen 47,47' und Reibbelägen 48,48' noch größer werden.

Ein weiterer Vorteil der Horizontal-Dämpfungs-Vorrichtung besteht darin, die Federbeine 2 gegen Auslenkungen in Richtung der Drehachse 6 schützen. Hierdurch wird gleichzeitig also das Auftreten sogenannter Nickschwingungen des Waschaggregates 1 in Richtung zur Klappe 10 oder in entgegengesetzter Richtung und damit ein entsprechendes Anschlagen des Waschaggregates 1 in dieser Richtung gegen das Gehäuse 12 vermieden. Derartige Nickschwingungen sind nicht dynamisch, also durch die Unwucht der umlaufenden Waschtrommel 8, bedingt, sondern in der Regel statisch veranlaßt. Sie können daher auch durch die - wenn auch elastische - Einspannung zwischen den Bügeln 42,42' bzw. 42a,42a' unterbunden werden.

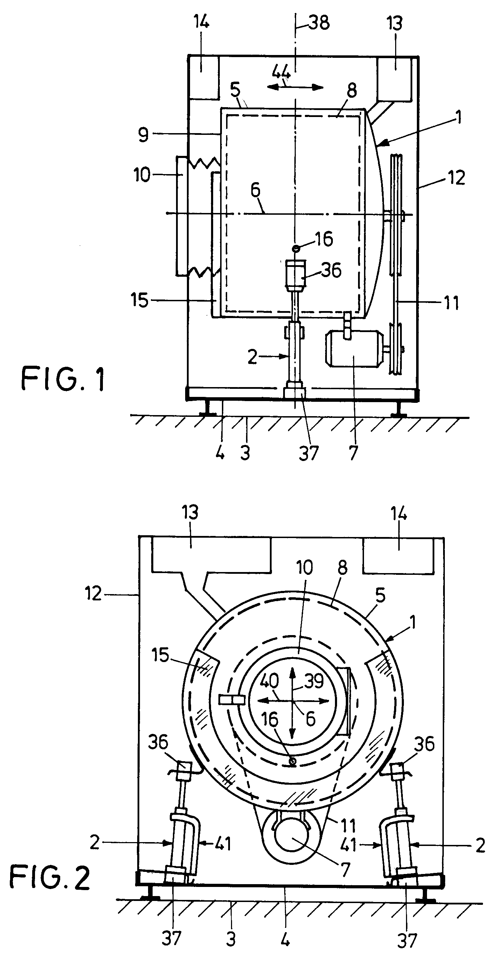

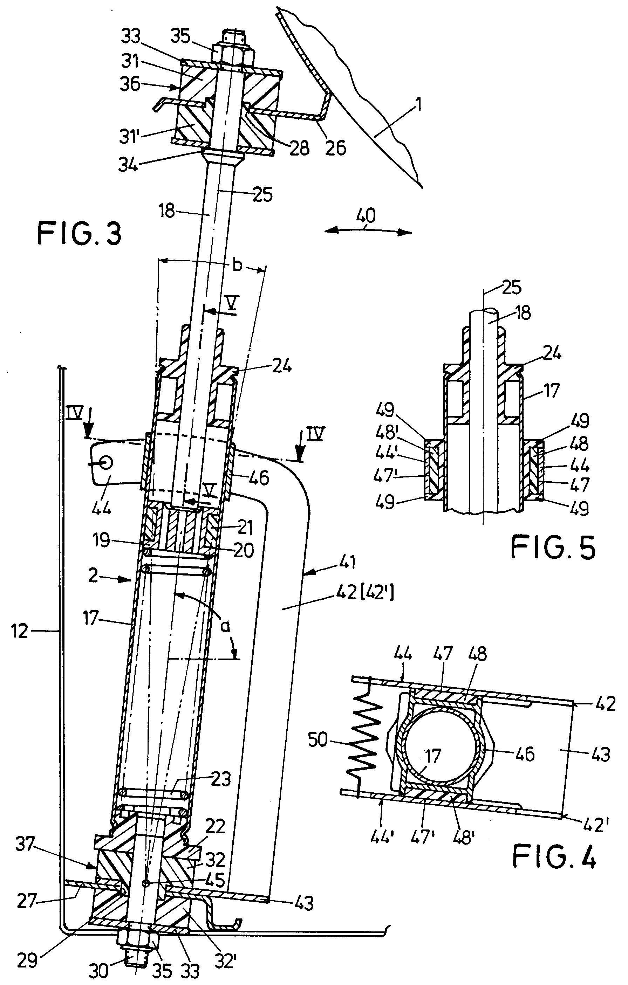

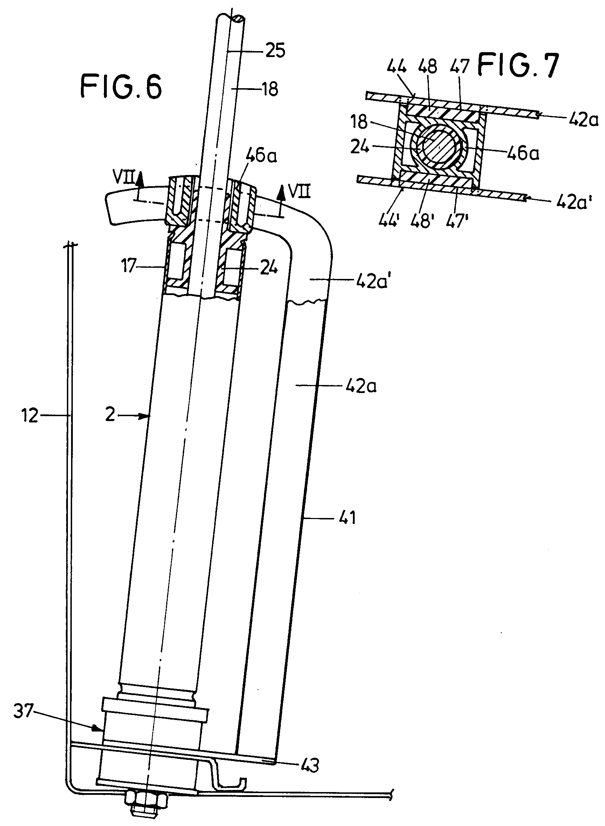

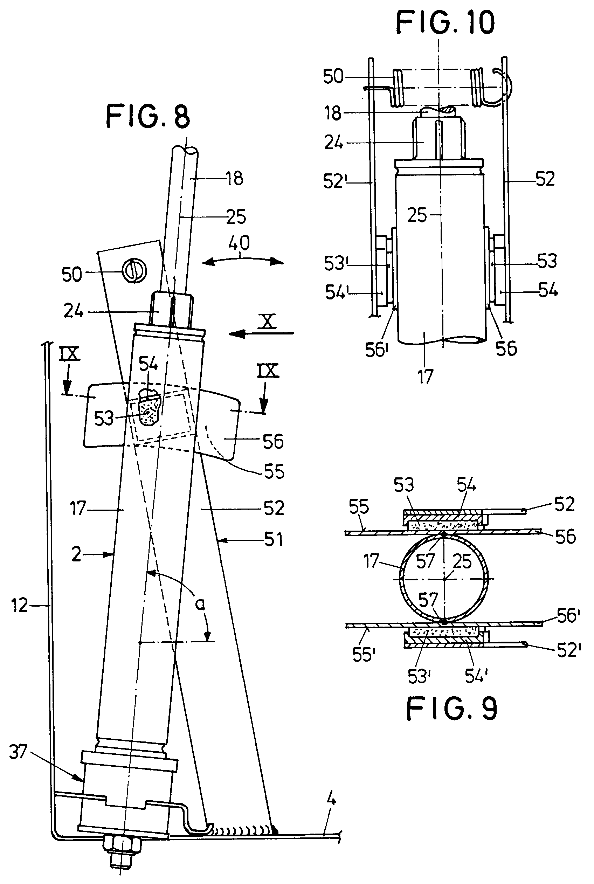

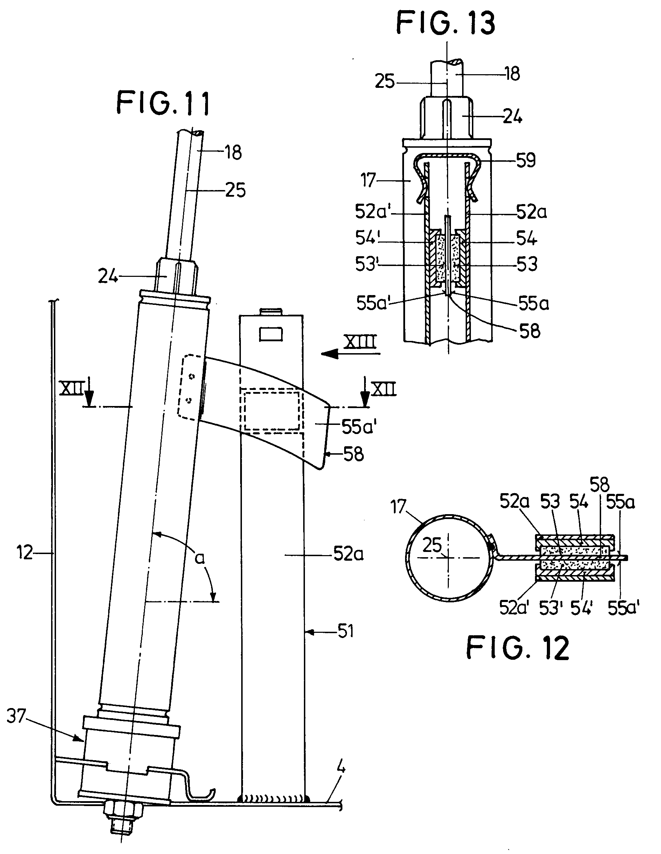

Bei den Ausführungsbeispielen nach den Fig. 8, 9, 10 einerseits und den Fig. 11, 12, 13 andererseits sind die Federbeine jeweils identisch mit dem Federbein 2, wie es in Fig. 3 dargestellt ist. Aus diesem Grunde ist das Federbein jeweils nur in einer Teil-Außenansicht dargestellt. Des weiteren werden identische Teile jeweils mit derselben Bezugsziffer versehen, ohne daß es einer gesonderten Beschreibung bedarf.

Bei dem Ausführungsbeispiel nach den Fig. 8 bis 10 weist eine Horizontal-Dämpfungs-Vorrichtung 51 zwei an der Grundplatte 4 der Waschmaschine fest - durch Schweißen, Schrauben oder Nieten - angebrachte Bügel 52,52' auf. Diese Bügel 52,52' bestehen aus stabilen Blechstreifen mit etwa rechteckiger Form. Sie sind in Richtung der Achse 6 hintereinander angeordnet und entgegen dem Neigungswinkel a zum Rohr 17 des Federbeins 2 hin geneigt. Sie tragen in dem Bereich, in dem sie sich mit dem Rohr 17 des Federbeins 2 überdekken, Reibbeläge 53,53', die jeweils in einer am jeweiligen Bügel 52,52' angebrachten Aufnahme 54,54' gehalten sind. Diese Reibbeläge 53,53' liegen jeweils gegen Reibungsflächen 55,55' von plattenförmigen Reibungswiderlagern 56,56' an, die am Rohr 17 des Federbeins 2 mittels einer Punktschweißung 57 befestigt sind. Diese plattenförmigen Reibungswiderlager 56,56' erstrecken sich - wie insbesondere Fig. 8 entnehmbar ist - in Richtung des horizontalen Schwingungs-Richtungspfeiles 40. Die beiden Bügel 52,52' sind an ihren freien Enden mittels einer vorgespannten Schrauben-Zugfeder 50 aufeinander zu verspannt, damit die Reibbeläge 53,53' mit einer vorgegebenen und gewünschten Reibungskraft an den Reibungswiderlagern 56,56' anliegen.

Auch hier sind die Bügel 52,52' aufgrund ihrer Länge und ihrer Ausbildung als Blechstreifen in Richtung der Drehachse 6 so weit flexibel, daß die Federbeine 2 gegen Nickschwingungen des Waschaggregates 1 in Richtung der Drehachse 6 nicht starr eingespannt sind.

Das Ausführungsbeispiel nach den Fig. 11 bis 13 ist dem nach den Fig. 8 bis 10 sehr ähnlich; nur die Unterschiede werden daher beschrieben; ansonsten wird auf die vorherige Beschreibung verwiesen. Die Bügel 52a, 52a' stehen senkrecht von der Grundplatte 4 hoch; sie nehmen zwischen sich nicht das Rohr 17 auf, sondern nur ein einziges in Form einer Platte ausgebildetes Reibungswiderlager 58, das am Rohr 17 angebracht ist und von diesem radial zu dessen Mittel-Längs-Achse 25 absteht. Es weist auf seinen beiden Seiten Reibungsflächen 55a und 55a' auf. Gegen diese beiden Reibungsflächen 55a und 55a' liegen die Reibungsbeläge 53,53' an, deren Aufnahmen 54,54' ebenfalls an den Bügeln 52a,52a' angebracht sind. Um eine notwendige Anpreßkraft zwischen Reibungsbelägen 53,53' und Reibungsflächen 55a,55a' zu erreichen, sind die freien Enden der Bügel 52a,52a' mittels einer nach Art einer Klammer ausgebildeten Feder 59 aufeinander zu verspannt.

**Patentansprüche**

1. Schwingungsfähige Abstützung für Trommelwaschmaschinen, mit einem Waschaggregat (1) mit horizontaler Drehachse (6), mit einem Gehäuse (12) mit einer Grundplatte (4), mit mindestens zwei Federbeinen (2), die jeweils aus mindestens zwei Teilen, nämlich einem Rohr (17) und einem hierin in Richtung einer gemeinsamen Mittel-Längs-Achse (25) geführten Stößel (18), bestehen, mit einem elastischen Lager (37) mittels dessen das eine Teil (Rohr 17) jedes Federbeines (2) mit der Grundplatte verbunden ist und mit einem elastischen Lager (36) mittels dessen das andere Teil (Stößel 18) jedes Federbeines (2) mit dem Waschaggregat (1) verbunden ist, wobei jeweils mindestens ein Federbein (2) beiderseits der Drehachse (6) überwiegend vertikal angeordnet ist, dadurch gekennzeichnet, daß mindestens einem Federbein (2) eine Horizontal-Dämpfungs-Vorrichtung (41, 51)) zugeordnet ist, die das Federbein (2) zumindest teilweise zwischen sich aufnehmende, relativ zur Grundplatte (4) im wesentlichen ortsfeste und quer zur Drehachse (6) verlaufende Arme (Reibungsarme 44,44'; Bügel 52,52';52a,52a') aufweist, wobei zwischen dem an der Grundplatte (4) angelenkten Teil (Rohr 17) des Federbeins (2) und den Trägern relativ zueinander bewegliche Reibbeläge (48,48';53,53') und Reibflächen (47,47'; 55,55'; 55a,55a') vorgesehen sind.

2. Abstützung nach Anspruch 1, dadurch gekennzeichnet, daß die Reibbeläge (48,48') am Rohr (17) jedes Federbeins (2) angebracht sind.

3. Abstützung nach Anspruch 1 oder 2, dadurch gekennzeichnet, daß die Reibbeläge (48,48') an einer Reibungsbüchse (46,46a) angebracht sind, die auf dem Federbein (2) in Richtung der Mittel-Längs-Achse (25) verschiebbar angeordnet ist.

4. Abstützung nach Anspruch 3, dadurch gekennzeichnet, daß die Reibungsbüchse (46,46a) mit Führungsstegen (49) an mindestens einem Arm (Reibungsarm 44,44') anliegt, die Relativbewegungen zwischen Reibungsbüchse (46,46a) und Arm (Reibungsarm 44,44') in Richtung der MittelLängs-Achse 25 verhindern, in Richtung des mindestens einen Arms (Reibungsarm 44,44') aber zulassen.

5. Abstützung nach einem der Ansprüche 1 bis 4, dadurch gekennzeichnet daß die Arme (Reibungsarme 44,44') teilkreisförmig mit einem Krümmungs-Mittelpunkt (45) ausgebildet sind, der etwa in der Mittel-Längs-Achse (25) und in dem elastischen Lager (37) an der Grundplatte (4) liegt.

6.   Abstützung nach einem der Ansprüche 1 bis 5, dadurch gekennzeichnet, daß die Arme (Reibungsarme 44,44'; Bügel 52,52';52a,52a') mittels einer Feder (50,59) unter Vorspannung der Reibbeläge (48,48';53,53') gegen die Reibungsflächen (47,47';55,55') miteinander verbunden sind.

7.   Abstützung nach einem der Ansprüche 1 bis 6, dadurch gekennzeichnet, daß die Arme (Reibungsarme 44,44'; Bügel 52,52';52a,52a') mit der Grundplatte (4) verbunden sind.

8.   Abstützung nach Anspruch 7, dadurch gekennzeichnet, daß die Bügel (42,42',42a,42a') an einer gemeinsamen Halteplatte (43) angebracht sind, die im elastischen Lager (37) an der Grundplatte (4) eingespannt ist.

9.   Abstützung nach einem der Ansprüche 1, 6, 7, dadurch gekennzeichnet, daß die Reibbeläge (53,53') an den Armen (Bügel 52,52';52a,52a') angebracht sind und gegen am Rohr (17) angebrachte Reibungsflächen (55,55'; 55a,55a') anliegen.

10.  Abstützung nach Anspruch 9, dadurch gekennzeichnet, daß die Reibungsflächen (55,55';55a,55a') an mindestens einem mit dem Rohr (17) verbundenen Reibungswiderlager (56,56';58) ausgebildet sind.

FIG. 1

FIG. 2

FIG.3

FIG.5

FIG.4

FIG.6

FIG.7

25
18
46a
VII
VII
17
24
42a'
42a
41
12
2
37
43

44 48 47
18
24
46a
42a
44' 48' 47'
42a'

# FIG. 10

# FIG. 8

# FIG. 9

FIG. 13

FIG.11

FIG. 12

Europäisches
Patentamt

**EUROPÄISCHER RECHERCHENBERICHT**

Nummer der Anmeldung

EP    92 10 2546

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | EP-A-0 108 217 (FRITZ BAUER & SÖHNE OHG) <br> * Zusammenfassung; Abbildungen 1-3 * <br> --- | 1 | D06F37/22 <br> F16F7/08 <br> F16F9/32 |
| A | DE-A-2 043 939 (COMPAGNIE FRANCAISE THOMSON HOUSTON HOTCHKISS BRANOT) <br> * Seite 3, Zeile 25 - Seite 4, Zeile 2 * <br> * Abbildungen 1-4 * <br> --- | 1,7 | |
| A | DE-A-3 626 065 (FRITZ BAUER & SÖHNE OHG) <br> * Spalte 3, Zeile 8 - Zeile 54 * <br> * Spalte 4, Zeile 9 - Zeile 22 * <br><br> ----- | 1,6,7 | |

**RECHERCHIERTE SACHGEBIETE (Int. Cl.5 )**

D06F
F16F

Der vorliegende Recherchenbericht wurde für alle Patentansprüche erstellt

| Recherchenort | Abschlußdatum der Recherche | Prüfer |
|---|---|---|
| OEN HAAG | 09 JULI 1992 | GOODALL C.J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
    Dokument

EPO FORM 1503 03.82 (P0403)